# EUROPÄISCHE PATENTSCHRIFT

(11) **EP 1 050 086 B1**
(45) Veröffentlichungstag und Bekanntmachung des Hinweises auf die Patenterteilung: **24.04.2002**
(21) Anmeldenummer: 99904724.4
(22) Anmeldetag: 19.01.1999
(51) Int. Cl.: H01M 8/04, H01M 8/00, H01M 8/10

(54) **VERFAHREN UND VORRICHTUNG ZUM BETREIBEN EINER DIREKT-METHANOL-BRENNSTOFFZELLE MIT GASFÖRMIGEM BRENNSTOFF**
METHOD AND DEVICE FOR OPERATING A DIRECT METHANOL FUEL CELL WITH GASEOUS FUEL
PROCEDE ET DISPOSITIF POUR ACTIONNER UNE PILE A COMBUSTIBLE METHANOL DIRECTE AVEC UN COMBUSTIBLE GAZEUX

(30) Priorität: 21.01.1998 DE 19802038
(43) Veröffentlichungstag der Anmeldung: 08.11.2000
(73) Patentinhaber: FORSCHUNGSZENTRUM JÜLICH GMBH, 52425 Jülich (DE)
(72) Erfinder: MENZER, Reinhard, D-52428 Jülich (DE); HÖHLEIN, Bernd, D-52441 Linnich (DE)
(86) Internationale Anmeldenummer: DE9900155
(87) Internationale Veröffentlichungsnummer: WO9938223

(56) Entgegenhaltungen:
- WO-A-97/50140
- PATENT ABSTRACTS OF JAPAN vol. 097, no. 004, 30. April 1997 -& JP 08 321320 A (MITSUBISHI ELECTRIC CORP), 3. Dezember 1996 -& DATABASE WPI Derwent Publications Ltd., London, GB; AN 97-074681 XP002106503 A
- SCOTT K ET AL: "PERFORMANCE AND MODELLING OF A DIRECT METHANOL SOLID POLYMER ELECTROLYTE FUEL CELL" JOURNAL OF POWER SOURCES, Bd. 65, Nr. 1/02, 1. März 1997, Seiten 159-171, XP002044891
- PATENT ABSTRACTS OF JAPAN vol. 018, no. 167 (E-1528), 22. März 1994 & JP 05 343085 A (HONDA MOTOR CO LTD), 24. Dezember 1993
- SHUKIA A K ET AL: "VAPOUR-FEED DIRECT-METHANOL FUEL CELL WITH PROTON-EXCHANGE MEMBRANE ELECTROLYTE" JOURNAL OF POWER SOURCES, Bd. 55, Nr. 1, 1. Mai 1995, Seiten 87-91, XP000541735
- SCHMIDT V M ET AL: "DEMS AND SINGLE CELL MEASUREMENTS OF A DIRECT METHANOL FUEL CELL" ELECTROCHEMICAL SOCIETY PROCEEDINGS, Bd. 95, Nr. 23, 1. Oktober 1995, Seiten 267-277, XP002044890
- PATENT ABSTRACTS OF JAPAN vol. 013, no. 038 (E-709), 27. Januar 1989 -& JP 63 237363 A (HITACHI LTD), 3. Oktober 1988
- PATENT ABSTRACTS OF JAPAN vol. 017, no. 022 (E-1307), 14. Januar 1993 & JP 04 249865 A (AISIN AW CO LTD), 4. September 1992

## Beschreibung

Die Erfindung betrifft ein Verfahren und eine Vorrichtung zum Betreiben einer Direkt-Methanol-Brennstoffzelle mit gasförmigem Brennstoff.

Eine Brennstoffzelle ist ein elektrochemischer Wandler, in dem ohne den Umweg über Wärme und mechanische Energie direkt aus einem Brennstoff und einem Oxidationsmittel elektrische Energie gewonnen werden kann. Sie besteht aus einer Kathode, einer Anode und einem dazwischenliegenden Elektrolyten. Der Kathode wird das Oxidationsmittel (z. B. Luft) und der Anode wird der Brennstoff (z. B. Methanol) zugeführt. Kathode und Anode der Brennstoffzelle weisen in der Regel eine durchgehende Porosität auf, damit die beiden Betriebsmittel (Brennstoff und Oxidationsmittel) dem Elektrolyten zugeführt und die Reaktionsprodukte abgeführt werden können. Kohlendioxid ist ein typisches Reaktionsprodukt auf der Anodenseite. Auf der Kathodenseite entsteht Wasser.

Aus der Druckschrift DE 195 31 852 C1 sind Brennstoffzellen bekannt, bei denen protonenleitende Membranen als Elektrolyt eingesetzt und die bei Temperaturen von 100°C betrieben werden. An der Anode einer solchen Brennstoffzelle bilden sich in Anwesenheit des Brennstoffs mittels eines Katalysators Protonen. Die Protonen passieren den Elektrolyten und verbinden sich auf der Kathodenseite mit dem vom Oxidationsmittel stammenden Sauerstoff zu Wasser. Elektronen werden dabei freigesetzt und elektrische Energie erzeugt.

In einer Brennstoffzelle wird Wärme erzeugt. Diese Wärme wird regelmäßig durch ein durch die Brennstoffzelle strömendes Kühlmittel abgeführt. Hierfür wird eine Brennstoffzelle mit Kühlmittelleitungen versehen. Die Temperatur des in die Kühlmittelleitungen eingeleiteten Kühlmittels liegt unterhalb der Arbeitstemperatur der Brennstoffzelle.

Bei einer sogenannten "Direkt-Methanol-Brennstoffzelle" wird Methanol zusammen mit Wasser an der Anode zu Protonen und Kohlendioxid umgesetzt. Die Protonen passieren den Elektrolyten und werden in der genannten Form an der Kathode zu Wasser umgesetzt. Das Kohlendioxid wird als gasförmiges Reaktionsprodukt aus dem Anodenraum abgeleitet. Die "Direkt-Methanol-Brennstoffzelle" wird im folgenden DMFC genannt.

Es ist grundsätzlich möglich, eine DMFC mit einem flüssigen oder einem dampfförmigen Gemisch aus Methanol und Wasser zu betreiben.

Nachteilig tritt beim Betrieb einer DMFC mit flüssigem Brennstoff mit Kohlendioxid eine zweite gasförmige Phase auf. Das in unmittelbarer Nähe des Elektrolyten gebildete Kohlendioxid muß über die Poren der Anode den Bereich der Reaktion verlassen. Es behindert dabei den gleichmäßigen Zustrom des flüssigen Brennstoffs zum Elektrolyten. Die Leistung der Brennstoffzelle wird folglich vermindert.

Entlang des Transportweges des Brennstoffs durch den Anodenraum nimmt der Anteil der gasförmigen Phase kontinuierlich zu. Es entsteht so eine sehr unterschiedliche Verteilung der beiden Phasen (flüssig und gasförmig) im Anodenraum.

Der sinkende Volumenanteil der flüssigen (durch den Brennstoff und das Wasser gebildeten) Phase entlang des Anodenraums bewirkt eine zunehmende Verdampfung der ursprünglich flüssigen Phase.

Der Anodenraum teilt sich durch den genannten sinkenden Volumenanteil und der damit einhergehenden zunehmenden Verdampfung in zwei Bereiche auf. Im ersten Bereich wird der Elektrolyt mit einem Brennstoff-Wasser-Gemisch benetzt. In einem nachfolgenden zweiten Bereich wird der Elektrolyt nicht mit Flüssigkeit benetzt.

Ein Transport von flüssigen und gasförmigen Stoffen in einem porösen System verläuft sehr unterschiedlich. Liegen eine flüssige und eine gasförmige Phase nebeneinander vor, so wird im wesentlichen nur ein Gastransport durch die Poren stattfinden, die nicht mit Flüssigkeit benetzt sind. Die mit Flüssigkeit gefüllten Poren können wegen des höheren Druckverlustes vom Gas im allgemeinen nicht passiert werden.

Die unterschiedlichen Verhältnisse im Anodenraum führen zu Leistungsverlusten.

Durch einen geeignet hohen Druck im Anodenraum kann der vorgenannten Teilung in zwei Bereiche entgegengewirkt werden.

Ein hoher Druck im Anodenraum erhöht nachteilhaft die Permeation von Brennstoff und Wasser durch den Elektrolyten. Leistungsverluste sind die Folge. Ein hoher Druck im Anodenraum belastet ferner mechanisch die Elektrolytmembran und führt u. U. zur Zerstörung.

Die vorgenannten Wirkungen aufgrund eines hohen Druckes auf der Anodenseite können durch einen geeignet hohen Druck auf der Kathodenseite vermieden werden. Um den Druck auf der Kathodenseite geeignet zu erhöhen, muß jedoch eine Arbeit verrichtet werden. Der Wirkungsgrad der Brennstoffzelle vermindert sich entsprechend.

Ein erhöhter Druck begünstigt vorteilhaft die Transport- und elektrochemischen Vorgänge in der porösen Kathodenschicht. So wird der Wirkungsgrad gesteigert.

Der Druck auf der Kathodenseite einer Brennstoffzelle vom Typ DMFC mit einer Membran als Elektrolyten beträgt aufgrund der vorgenannten gegenläufigen Wirkungen vorzugsweise 200 bis 250 kPa. Typischerweise liegt der Druck auf der Anodenseite einer Brennstoffzelle 30 kPa niedriger als auf der Kathodenseite.

Wird ein dampfförmiges Methanol-Wasser-Gemisch in den Anodenraum einer DMFC eingeleitet, so liegt nur noch eine gasförmige Phase vor. Auf einfache Weise werden so zwei Phasen und die damit einhergehenden, genannten Nachteile vermieden.

Aufgabe der Erfindung ist die Schaffung eines Verfahrens für einen leistungsfähigen Betrieb einer DMFC sowie die Schaffung einer Vorrichtung für die Durchführung des Verfahrens.

Die Aufgabe der Erfindung wird durch ein Verfahren mit den Merkmalen des Hauptanspruchs sowie durch eine Vorrichtung mit den Merkmalen des Nebenanspruchs gelöst. Vorteilhafte Ausgestaltungen ergeben sich aus den rückbezogenen Ansprüchen.

Unter Verdampfer (Verdampfereinrichtung) ist eine Vorrichtung zu verstehen, in der Flüssigkeit verdampft wird.

Beim anspruchsgemäßen Verfahren wird Kühlmittel in der Brennstoffzelle verdampft. Das verdampfte Kühlmittel wird in einer ersten Alternative einem Wärmetauscher zugeführt. Der Wärmetauscher ist Bestandteil einer Verdampfereinrichtung. Durch Kondensation im Wärmetauscher wird die Wärme an die Verdampfereinrichtung bei im wesentlichen gleichbleibender Temperatur abgegeben. Der Phasenübergang zwischen Dampf bzw. Gas und Flüssigkeit wird also genutzt, um Wärme an den Verdampfer zu übertragen. Zugleich wird eine nahezu konstante Temperatur eingehalten.

In der Verdampfereinrichtung wird ein Methanol-Wasser-Gemisch verdampft. Dabei gibt der Wärmetauscher Wärme an das Methanol-Wasser-Gemisch ab. Die Verdampfungstemperatur liegt währenddessen unterhalb der Kondensationstemperatur des eingesetzten Kühlmittels.

Geeignete Kühlflüssigkeiten sind grundsätzlich alle Flüssigkeiten, die im vorgesehenen Temperaturbereich sieden können. Dies kann bei Umgebungsdruck (Normaldruck), aber auch im Über- oder Unterdruckbereich der Fall sein.

Beispielhaft werden genannt:

| Flüssigkeit | Siedetemperatur/°C | Druck/kPa | Betriebstemperatur der Zelle/°C |
|---|---|---|---|
| Wasser | 90 | 70 | 100 |
| Methanol | 90 | 255 | 100 |
| Ethanol | 90 | 158 | 100 |

Das verdampfte Methanol-Wasser-Gemisch wird anschließend in den Anodenraum der Brennstoffzelle eingeleitet.

In einer zweiten Alternative ist das Methanol-Wasser-Gemisch mit dem flüssigeits Kühlmittel, das in der Brennstoffzelle verdampft wird, identisch. Es entfällt dann der externe Verdampfer mit dem Wärmetauscher. Die Brennstoffzelle fungiert zugleich als Verdampfer. Das verdampfte Gemisch wird anschließend in den Anodenraum eingeleitet.

Durch das anspruchsgemäße Verfahren kann folglich auf besonders einfache Weise eine vorgegebene Temperatur in der Verdampfereinrichtung eingehalten werden. Durch das Verfahren wird sichergestellt, daß im Verdampfer keine lokale Überhitzung stattfindet. Eine Überhitzung könnte eine Verkokung des Methanols bewirken. Verkoktes Methanol kann nicht mehr zu Wasserstoff umgesetzt werden. Die Ausbeute an Strom vermindert sich entsprechend.

Durch die verfahrensgemäße Verdampfung des Methanol-Wasser-Gemisches vor der Einleitung in den Anodenraum der Brennstoffzelle wird auf energetisch günstige Weise sichergestellt, daß im Anodenraum nicht nachteilhaft eine flüssige Phase auftritt. Die Wärme, die beim Betrieb der Brennstoffzelle entsteht, wird für die Verdampfung genutzt. Dem System muß dann regelmäßig keine zusätzliche Wärme zugeführt werden.

Um das Methanol vollständig umsetzen zu können, muß der molare Anteil des Wassers in dem Methanol-Wasser-Gemisch mindestens gleich dem molaren Anteil des Methanols sein. Vorteilhaft überwiegt daher regelmäßig der molare Anteil des Wassers im Methanol-Wasser-Gemisch.

Beträgt das molare Mischungsverhältnis von Wasser :
Methanol = 1.5, so ist eine vollständige Verdampfung bei einem Gesamtdruck von 170 kPa auf der Anodenseite erst bei Temperaturen deutlich oberhalb von typischen Betriebstemperaturen der DMFC möglich. Der gewünschte Wärmefluß von der Brennstoffzelle zum Methanol-Wasser-Gemisch mit einhergehender Verdampfung setzt jedoch voraus, daß die Betriebstemperatur der DMFC oberhalb der Verdampfungstemperatur liegt.

Flüssigkeiten werden vollständig verdampft, wenn eine zu einem bestimmten Druck gehörende Temperatur überschritten, oder ein zu einer bestimmten Temperatur gehörender Druck unterschritten wird.

Die vollständige Verdampfung des Methanol-Wasser-Gemisches kann bei einer vorgegebenen Temperatur daher durch Einstellung eines geeigneten Partialdrucks des Gemisches bewirkt werden. In einer vorteilhaften Ausgestaltung des Verfahrens wird daher ein Trägergas dem Methanol-Wasser-Gemisch vor der Verdampfung zugeführt. Das Trägergas ist so auszuwählen, daß es sich inert verhält. CO₂ verhält sich inert und ist daher geeignet. Mit Hilfe des Trägergases wird der Partialdruck des Methanol-Wasser-Gemisches so eingestellt, daß eine vollständige Verdampfung des Methanol-Wasser-Gemisches bei einer vorgegebenen Temperatur erreicht wird. Die vorgegebene Temperatur wird (etwas) unterhalb der Kondensationstemperatur des Kühlmittels liegen.

In einer vorteilhaften Ausgestaltung der Erfindung wird das im Anodenraum entstehende CO₂ als Trägergas eingesetzt. Es wird also der Verdampfereinrichtung zugeführt. Bei dieser Ausgestaltung muß inertes Trägergas nicht separat bereitgestellt werden. Insbesondere im mobilen Bereich ist diese Ausgestaltung von Vorteil.

Das im Anodenraum entstehende CO₂ als Trägergas zur Verdampfung einzusetzen, kann unabhängig von den anderen Verfahrensschritten erfolgen.

In einer weiteren vorteilhaften Ausgestaltung des Verfahrens wird die Brennstoffzelle mit einer siedenden Flüssigkeit gekühlt. Hierunter ist zu verstehen, daß die Flüssigkeit sich bereits beim Eintritt in die Brennstoffzelle auf Siedetemperatur befindet.

Statt sich in der Brennstoffzelle aufzuheizen, wird die siedende Flüssigkeit bei nahezu gleichbleibender Temperatur in Dampf überführt. Folglich entstehen in der Brennstoffzelle keine Temperaturgradienten. Temperaturgradienten würden die Leistung und die Lebensdauer einer Brennstoffzelle vermindern.

Die anspruchsgemäße Vorrichtung umfaßt eine Verdampfereinrichtung, in der das Methanol-Wasser-Gemisch vor der Einleitung in den Anodenraum der Brennstoffzelle verdampft wird. Die Vorrichtung weist Mittel auf, um überschüssige Wärme der Brennstoffzelle an das Methanol-Wasser-Gemisch abzugeben.

Der Verdampfer weist zum Beispiel Wärmetauscher auf, um die von der Brennstoffzelle zugeführte Wärme an das zu verdampfende Methanol-Wasser-Gemisch abzugeben.

Die Vorrichtung kann Mittel umfassen, um das aus der Brennstoffzelle austretende Kühlmittel dem Wärmetauscher zuzuführen. Das austretende Kühlmittel wird dann den Wärmetauschern der Verdampfereinrichtung zugeführt und zur Verdampfung des Methanol-Wasser-Gemisches genutzt.

Es wird so auf energetisch günstige Weise sichergestellt, daß im Anodenraum keine nachteilhafte, flüssige Phase auftritt.

In einer vorteilhaften Ausgestaltung der Vorrichtung weist diese Mittel auf, um der Verdampfereinrichtung CO₂ als Trägergas zuzuführen, das im Anodenraum der Brennstoffzelle entsteht.

In einer weiteren vorteilhaften Ausgestaltung der Erfindung fungieren die Kühlmittelleitungen in der Brennstoffzelle zugleich als Verdampfer für das Methanol-Wasser-Gemisch. Das Kühlmittel wird dann nach Austritt aus den Kühlmittelleitungen dem Anodenraum der Brennstoffzelle zugeführt. Es lassen sich so besonders hohe Wirkungsgrade erzielen.

Vorteilhaft wird bei der zuletzt genannten Ausführungsform im Anodenraum entstehendes CO₂ durch entsprechende Mittel den Kühlmittelleitungen zugeführt.

In einer weiteren vorteilhaften Ausführungsform weist die anspruchsgemäße Vorrichtung Pumpen auf, um gewünschte Drucke oder Strömungsgeschwindigkeiten des Kühlmittels zu erzeugen.

Es zeigen:
Figur 1: Fließbild einer erfindungsgemäßen Vorrichtung

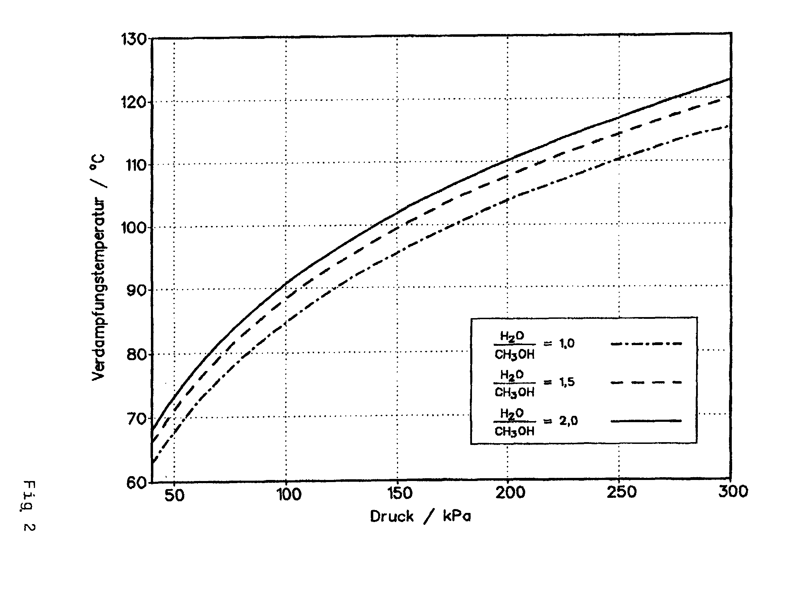

Figur 2: Verdampfungsverhalten von Methanol-Wasser-Gemischen

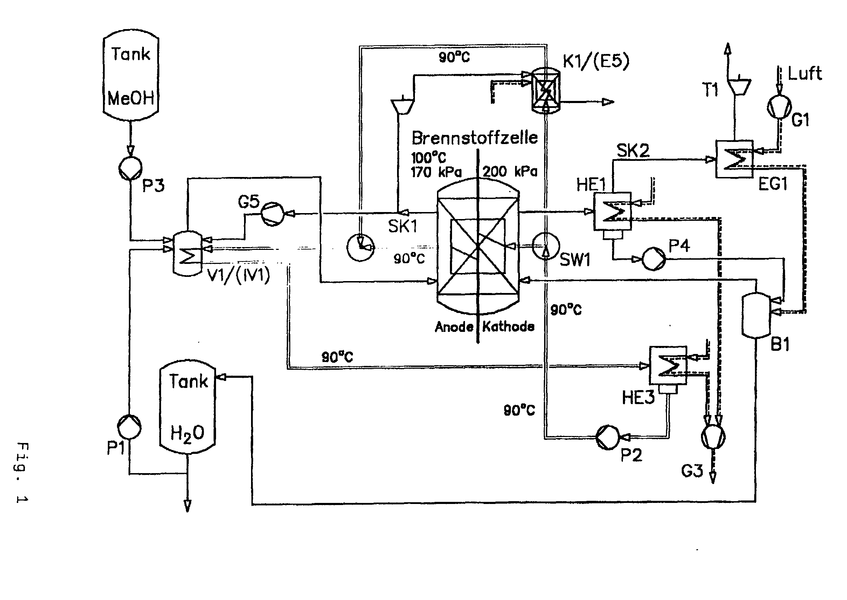

Figur 1 zeigt ein Fießbild eines DMFC-Systems mit V1: Verdampfer, P..: Pumpe, G..: Verdichter/Gebläse, HE..: Kühler/Kondensatabscheider, E5, EG1, IV1: Wärmetauscher, K1: Katalytkonverter, B1: Befeuchter, T1: (Abluft-)Turbine, SW1, SK1: Stoffstromteiler.

In einer DMFC entsteht auf der Anodenseite Kohlendioxid. Dieses muß aus der Brennstoffzelle entfernt werden, um den Betrieb aufrechtzuerhalten.

Ein Teil des Produktes Kohlendioxid wird an der Stelle SK1 ständig dem System entnommen. Dieser Teil wird nach Reinigung in einem Katalytkonverter, bzw. einem Abgaskatalysator, in die Umgebung abgegeben.

Ein anderer Teil dieses Produktes wird nach einer Verdichtung (G5) zwecks Überwindung der Druckverluste dem Verdampfer V1 zugeführt.

Dem Verdampfer werden Wasser und Methanol im vorgesehenen Verhältnis von 1,5 zugeführt.

Der Verdampfer V1 enthält einen Wärmetauscher IV1. Mit Hilfe des Wärmetauschers wird Wärme an das zu verdampfende Methanol-Wasser-Gemisch abgegeben. Überschüssige Wärme der DMFC wird mit dem Kühlmittel übertragen. Ein Teil des zunächst flüssigen Kühlmittels wird in der DMFC verdampft. Der Dampf wird dem Wärmetauscher zugeführt, kondensiert und überträgt so Wärme von der DMFC an das Methanol-Wasser-Gemisch. Bei dem gesamten Vorgang behält das Kühlmedium der Brennstoffzelle nahezu die gleiche Temperatur. Beispielhaft wird hierfür bei einer Betriebstemperatur der DMFC von 100°C eine Kühlmitteltemperatur von 90°C genannt.

Die dem Verdampfer zugeführte Menge an Kohlendioxid kann über einen breiten Bereich frei gewählt werden. Durch eine entsprechende Wahl kann der Anteil des Methanol-Wasser-Gemisches so gestaltet werden, daß bei

einer vollständigen Verdampfung des Gemisches nur ein geringer Partialdruck des Gemisches erreicht wird. Bei dem beispielhaft vorgeschlagenen Verhältnis von 1,5 und einer Temperatur von 75°C darf der Partialdruck des Gemisches nur ca. 60 kPa betragen.

Dieses vollständig verdampfte Gemisch aus dem Brennstoff Methanol und dem Reaktionspartner Wasser kann der DMFC zugeführt werden. In der DMFC selbst wird durch die Umsetzung Methanol und Wasser abgebaut und Kohlendioxid entwickelt, so daß dort bei der Betriebstemperatur diese beiden Stoffe nicht mehr kondensieren können und diese Brennstoffzelle ausschließlich mit einer Phase betrieben werden kann.

Die Einzelschritte können - bezogen auf den Temperaturverlauf - gemäß dem genannten Beispiel so dargestellt werden:

| | |
|---|---|
| Betriebstemperatur der DMFC | 100°C |
| Siedetemperatur des Kühlmediums | 90°C |
| Kondensationstemperatur des Kühlmediums | 90°C |
| Temperatur des Dampf-Gas-Gemisches | 75°C |

Die molare Zusammensetzung des Dampf-Gas-Gemisches:

| | |
|---|---|
| Methanol | 12,09 % |
| Wasser | 18,31 % |
| Kohlendioxid | 69,68 % |

und der Gesamtdruck dieses Gemisches von 170 kPa führen dazu, daß die Temperatur der vollständigen Verdampfung für das Gemisch aus Wasser und Methanol unter 75°C liegt.

In einer zweiten vorteilhaften Variante wird die Betriebsweise der DMFC so gewählt, daß die Abwärme der DMFC gerade ausreicht, um das Methanol-Wasser-Gemisch gerade eben zu verdampfen und außerdem die Betriebstemperatur der DMFC aufrecht zu erhalten.

Insbesondere dann kann als Kühlmittel das Methanol-Wasser-Gemisches mit dem Kohlendioxid vorgesehen werden. Das in der DMFC verdampfte Methanol-Wasser-Gemisch wird anschließend dem Anodenraum der DMFC zugeführt. Eine externe Verdampfung des Kühlmediums nebst zugehöriger Einrichtung entfällt. Die mit einem Wärmetransport unvermeidbar verbundenen Wärmeverluste werden vermieden. Die Temperatur des verdampften Methanol-Wasser-Gemisches kann so gesteigert und der Wirkungsgrad der Vorrichtung verbessert werden. Der Partialdruck dieses Gemisches kann dann entsprechend höher sein. Druckverluste können durch entsprechende Mittel, zum Beispiel durch einzelne Flüssigkeitsstrahlpumpen, getrieben durch das Brennstoff-Wasser-Gemisch, am Eintritt in die jeweilige Kühlschicht einer Brennstoffzelle oder eines mehrzelligen Brennstoffzellenblocks überwunden werden.

## Patentansprüche

1. Verfahren zum Betreiben einer Direkt-Methanol-Brennstoffzelle mit den Schritten:
a) in der Brennstoffzelle wird Kühlmittel verdampft;
b) in einem Verdampfer wird ein Methanol-Wasser-Gemisch verdampft;
c) die Wärme der Brennstoffzelle wird zur Verdampfung des Methanol-Wasser-Gemisches genutzt;
d) das verdampfte Methanol-Wasser-Gemisch wird dem Anodenraum der Brennstoffzelle zugeführt;
e) die Wärme der Brennstoffzelle wird entweder durch Kondensation des dampfförmigen Kühlmittels an den Verdampfer abgegeben oder indem das Methanol-Wasser-Gemisch als Kühlmittel eingesetzt wird.

2. Verfahren nach vorhergehendem Anspruch, bei dem im Anodenraum entstehendes Inertgas dem Methanol-Wasser-Gemisch vor der Verdampfung zugeführt wird.

3. Verfahren nach einem der vorhergehenden Ansprüche, bei dem die Brennstoffzelle mit einer siedenden Flüssigkeit gekühlt wird.

4. Vorrichtung zur Durchführung des Verfahrens nach Anspruch 1 bis 3,
umfassend eine Direkt-Methanol-Brennstoffzelle mit einer Kühlmittelleitung, einem Verdampfer, einer Brennstoffzuleitung zum Verdampfer sowie eine Leitung, über die der im Verdampfer verdampfte Brennstoff in den Anodenraum der Brennstoffzelle einleitet wird,
**gekennzeichnet durch** Mittel, die überschüssige Wärme der Brennstoffzelle an den Verdampfer weiterleiten, wobei diese Mittel eine Zuleitung von der Kühlmittelleitung in den Wärmetauscher des Verdampfers oder in den Anodenraum der Brennstoffzelle umfassen.

## Claims

1. Method of operating a direct methanol fuel cell in the following stages:
a) a cooling medium is evaporated in the fuel cell;
b) a methanol water mixture is evaporated in an evaporator;
c) the heat of the fuel cell is used for evaporation of the methanol water mixture;
d) the evaporated methanol water mixture is delivered to the anode chamber of the fuel cell;
e) the heat of the fuel cell is either delivered to the evaporator by way of condensation of the vapourised cooling medium or by utilising the methanol water mixture as a cooling medium.

2. Method according to the above claim in which an inert gas which develops in the anode chamber is delivered to the methanol water mixture prior to evaporation.

3. Method according to one of the above claims in which the fuel cell is cooled by means of a simmering liquid.

4. Device for carrying out the method according to Claim 1 to 3, comprising a direct methanol fuel cell with a cooling medium pipe, an evaporator, a fuel delivery pipe to the evaporator as well as a pipe by means of which fuel which has evaporated in the evaporator is introduced into the anode chamber of the fuel cell,
**characterised by** means which pass on surplus heat of the fuel cell to the evaporator, and these means include a feed pipe from the cooling medium pipe into the heat exchanger of the evaporator or into the anode chamber of the fuel cell.

## Revendications

1. Procédé pour faire fonctionner une pile à combustible directe au méthanol, comprenant les stades :
a) on évapore de l'agent réfrigérant dans la pile à combustible ;
b) on évapore un mélange de méthanol et d'eau dans un évaporateur ;
c) on utilise la chaleur de la pile à combustible pour évaporer le mélange de méthanol et d'eau ;
d) on envoie le mélange évaporé de méthanol et d'eau au compartiment anodique de la pile à combustible ;
e) on évacue la chaleur de la pile à combustible soit en condensant l'agent réfrigérant sous forme de vapeur sur l'évaporateur, soit en utilisant le mélange de méthanol et d'eau comme agent réfrigérant.

2. Procédé suivant la revendication précédente, dans lequel on ajoute avant l'évaporation, du gaz inerte se formant dans le compartiment anodique au mélange de méthanol et d'eau.

3. Procédé suivant l'une des revendications précédentes, dans lequel on refroidit la pile à combustible par un liquide bouillant.

4. Dispositif pour la mise en oeuvre du procédé suivant les revendications 1 à 3,
comprenant une pile à combustible directe au méthanol, ayant un conduit pour l'agent réfrigérant, un évaporateur, un conduit d'apport de combustible à l'évaporateur, ainsi qu'un conduit par lequel le combustible évaporé dans l'évaporateur est envoyé au compartiment anodique de la pile à combustible,
**caractérisé par** des moyens qui envoient la chaleur en excès de la pile à combustible à l'évaporateur, ces moyens comprenant un conduit d'apport allant du conduit pour l'agent réfrigérant à l'échangeur de chaleur de l'évaporateur, ou allant au compartiment anodique de la pile à combustible.
